# EUROPEAN PATENT SPECIFICATION

(11) **EP 2 346 191 B1**
(45) Date of publication and mention of the grant of the patent: **17.12.2014**
(21) Application number: 10150663.2
(22) Date of filing: 13.01.2010
(51) Int. Cl.: H04B 10/50, G02F 1/225, H04B 10/516

(54) **Optical Modulator**
Optischer Modulator
Modulateur optique

(43) Date of publication of application: 20.07.2011
(73) Proprietor: Xieon Networks S.à.r.l., 1748 Luxemburg (LU)
(72) Inventor: Rohde, Harald, 81673, München (DE); Gottwald, Erich, 83607, Holzkirchen (DE)
(74) Representative: Lucke, Andreas

(56) References cited:
- WO-A1-02/09325
- WO-A1-2009/001120
- US-A- 4 866 698
- US-A- 6 091 864
- US-A1- 2003 076 570
- US-A1- 2006 269 295
- US-A1- 2008 031 630
- US-A1- 2009 324 253

## Description

### Optical Modulator

The invention relates to an optical modulator and to a combined optical modulator comprising several such optical modulators and to a communication system with at least one optical modulator. Further, a method for providing optical carriers based on an input signal is suggested.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

Several PON types have been standardized and are currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers of around 1550 nm. Dense WDM uses the same transmission window but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., coherent Ultra-Dense Wavelength Division Multiplex (UDWDM) networks, are deemed to be a promising approach for future data access.

Data transmission of spectrally densely spaced wavelengths is utilized by applications as Next Generation Optical Access (NGOA) systems allowing high data rates of, e.g., 100 Gbit/s.

In these optical scenarios, a multitude of optical wavelengths are required in order to be individually modulated. Such optical wavelengths may have a spectral distance of a few gigahertz and can be used either for a ultra dense wavelength grid optical access system like NGOA where each user may be assigned a wavelength of his own or for a transmission of high data rates such as 100 Gbit/s where a multitude of wavelengths are bundled and are transmitted over a small spectral range.

Providing these individual wavelengths by several discrete lasers leads to a huge amount of laser sources that require a significant amount of precision and thus involve high costs. As an alternative, modulating a multitude of single sidebands on an optical carrier also leads to significant costs because of the electronics involved needing to cope with high frequencies required.

The problem to be solved is to overcome the disadvantages stated above and in particular to suggest an efficient solution for providing a multitude of optical wavelengths at a spectral distance of, e.g., a few GHz.

This problem is solved according to the features of the independent claims. Further embodiments result from the depending claims.

In order to overcome this problem, an optical modulator is provided
- comprising a first branch and a second branch, both being connectable to a an input, in particular to a light source;
- wherein the first branch comprises an amplitude modulator and a phase shifter, wherein the amplitude modulator is operable by a first signal that is substantially sinusoidal;
- wherein the second branch comprises an amplitude modulator that is operable by a second signal that is substantially 90 degree phase shifted to the first signal;
- comprising a combining unit with two inputs and two outputs that combines the optical fields of the first branch and the second branch;
- wherein each output is arranged to supply an optical carrier.

With the optical modulator branches being electrically modulated by substantially sinusoidal signals, the optical modulator provides optical carriers at a predetermined frequency offset to the frequency of the light source. These optical carriers can be further modulated with (electrical) data signals and the modulated data signals can be transmitted via an optical fiber. Also the optical carriers could be processed, e.g., split, into further optical carriers, in particular by an arrangement of cascaded or combined optical modulators.

The amplitude modulator modulates the electromagnetic field of the optical signal proportional to the control signal (i.e. the first signal) and the phase shifter provides a phase switching of 180-degree at the zero-crossing of the optical signal.

An output of the combining unit contains the same modulated data as does the other output of the combining unit, but on the opposite spectral side of the carrier signal provided by the light source (different offsets with regard to the carrier signal).

The amplitude modulators of the first branch and the second branch preferably operate at the same frequency thereby providing a carrier signal that is offset by this frequency from the input signal of the light source. Advantageously, this approach allows generating two carriers based on the input signal's carrier. The carriers can be flexibly adjusted based on the frequencies of the amplitude modulators.

It is noted that the substantially sinusoidal signal may comprise an amplitude modulation with a modulation index amounting to less than 10% and a modulation frequency amounting to less than 10 MHz. The substantially sinusoidal signal may also comprise a frequency modulation with a modulation frequency amounting to less than 10 MHz.

In an embodiment, the optical modulator comprises a two-beam interferometer.

In another embodiment, the first branch and the second branch of the optical modulator each comprises a Mach-Zehnder modulator.

The Mach-Zehnder modulator (MZM) allows for a control of the first branch opposite in phase with the second branch of the optical modulator.

In a further embodiment, a phase of the first branch or a phase of the second branch is adjusted to at least partially compensate a deficient suppression of the frequency of the light source.

Hence, the optical modulator can be adjusted such that the carrier is in principle completely eliminated. As the degree of carrier elimination may be limited by the imperfect symmetry of the interferometer arms, a slight misadjustment of the phase bias in a modulator branch, in particular the branch with the better extinction ratio, can be provided.

In a next embodiment, each output of the combining unit is modulated with an electrical data signal into an optical output signal that is combined and conveyed via an optical fiber.

Hence, the output of the combining unit provides an optical carrier that can be modulated with an electrical data signal at the baseband. It is noted that such electrical data signal may itself comprise a modulated data signal with at least two carriers.

It is also an embodiment that each output of the combining unit is conveyed via a splitter to a modulator and further to a polarization converter and the polarized output signal is combined and conveyed via an optical fiber.

This approach thus enables polarization multiplex, in particular by utilizing λ/4 polarization converters.

Pursuant to another embodiment, the optical modulator comprises a third output that provides the signal of the input.

Hence, the signal of the input can be utilized in particular in a cascaded structure of optical modulators for further processing.

According to an embodiment, the optical modulator supplies local oscillator signals in an optical component, in particular in an optical line terminal.

According to another embodiment, each output of the optical modulator is connected to a receiver of the optical component.

Hence, the carrier signals provided by the optical modulator can be used as local oscillator signals at the optical component, in particular to demodulate data signals that are received via an optical fiber.

In particular, several parallel and/or cascaded optical modulators can be used in such optical component to provide a required number of optical carriers at suitable frequencies, based on, e.g., a single light source.

The problem stated above is also solved by a combined optical modulator comprising several optical modulators as described herein, wherein the several optical modulators are fed via a common light source.

Such light source may provide an optical carrier that is conveyed to the several optical modulators via a splitter. The optical modulators are arranged in parallel and supply several carriers that could be used for being modulated with data signals to be conveyed via a single optical fiber.

The problem stated above is also solved by a combined optical modulator comprising several optical modulators as described herein, wherein a first output of a first optical modulator is connected to an input of a second optical modulator and a second output of the first optical modulator is connected to an input of a third optical modulator.

Hence, the optical modulators can be arranged in sequence (cascaded) to each other thereby providing several carriers at various offsets with regard to the frequency of the light source.

It is noted that the several optical modulators may operate at different frequencies in order to obtain a grid of optical carriers that are suitably spaced from each other.

It is in particular an option to combine the parallel and the serial arrangement of optical modulators as described herein in order to obtain a combined optical modulator.

Hence, the optical modulators described herein can be arranged in parallel and/or in sequence to each other. A single light source may be fed to several optical modulators and the output of each optical modulator may be fed to at least one input of another optical modulator and so forth. This allows generating a grid of optical carriers with a desired spacing, wherein each of the optical carriers can be used to be modulated with a data signal and the modulated signal can be fed to a combiner and be conveyed across an optical fiber.

The problem stated above is further solved by a communication system comprising at least one optical modulator as described herein or at least one combined optical modulator as also described herein.

The problem mentioned above is also solved by a method for providing several optical carriers based on an input signal,
- wherein the input signal is fed by a splitter to a first branch and to a second branch;
- wherein the input signal is modulated and phase shifted by the first branch, wherein the input signal is amplitude modulated by a first signal that is substantially sinusoidal;
- wherein the input signal is amplitude modulated by a second signal in the second branch, wherein the second signal is substantially 90 degree phase shifted to the first signal;
- wherein the optical fields of the first branch and the second branch are combined by a combining unit, which supplies two outputs,
- wherein each output provides an optical carrier.

An output of the combining unit contains the same modulated data as does the other output of the combining unit, but on the opposite spectral side of the carrier signal provided by the input signal (different offsets with regard to input's carrier).

It is noted that the features described with regard to the devices above are applicable for the method in an analogue manner. It is in particular an option to provide several optical carriers that are utilized as local oscillators for demodulation purposes in an optical component, e.g., in an OLT.

It is another embodiment that each output of the combining unit is modulated with an electrical signal and in particular such modulated signal is fed via a combiner onto an optical fiber.

Embodiments of the invention are shown and illustrated in the following figures:
- Fig.1: shows an optical modulator that supplies optical carriers relative to a frequency of a light source input to the optical modulator;
- Fig.2: shows a schematic block diagram comprising an exemplary optical multi-channel generator;
- Fig.3: shows a schematic diagram, wherein the structure of Fig.2 is extended to provide polarization multiplex (PolMux);
- Fig.4: shows an alternative block structure of an optical multi-channel generator providing six carriers;

- Fig.5: shows another schematic block structure of an optical multi-channel generator providing 14 carriers;
- Fig.6: shows a further schematic block structure of an optical multi-channel generator with a parallel structure providing 8 carriers;
- Fig.7: shows a schematic diagram comprising a four channel transceiver to be used in an OLT, wherein the transceiver comprises the optical multi-channel generator as shown in Fig.2;
- Fig.8: shows a more generalized structure as Fig.1. Instead of the MZM mentioned, different modulator schemes may apply as indicated by two modulator branches.

It is in particular suggested to use both outputs of a single sideband modulator (SSBM), wherein several such modulators could be connected in series or in parallel such that based on an input from a single light source (i.e. a single carrier) several carriers (frequencies) could be generated that are spaced apart from each other by, e.g., only a few gigahertz. These frequencies (or wavelengths) could be individually modulated and thus utilized for NGOA systems or UDWDM networks.

The SSBM could be realized as a two-beam interferometer, e.g., a Michelson interferometer, in particular by a Mach-Zehnder Modulator (MZM).

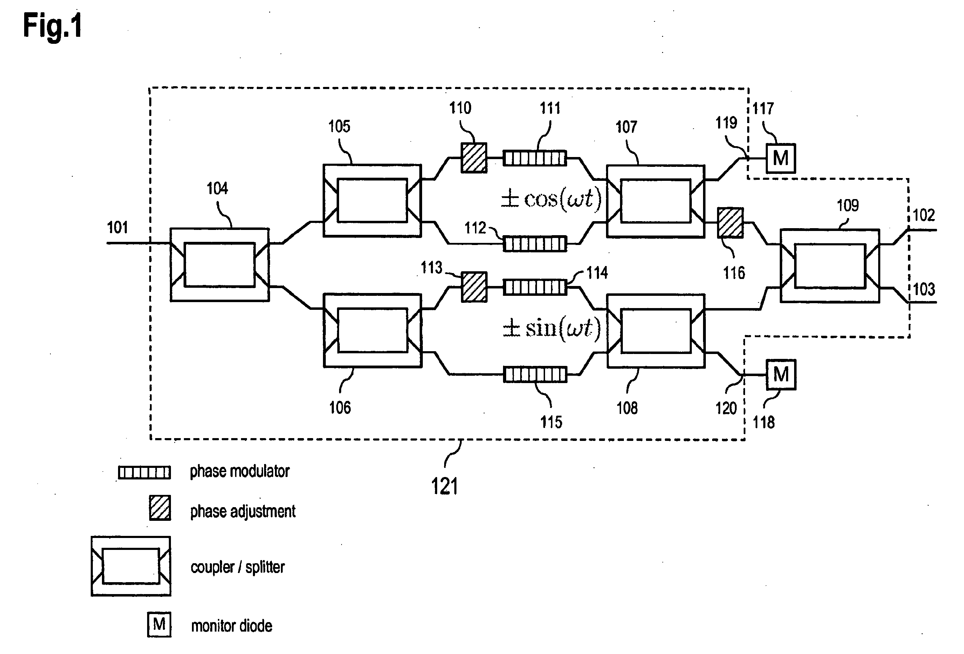

**Fig.1** shows a modulator structure comprising a coupler 104 (also referred to as splitter) to which an input signal (light) 101 is fed. The coupler 104 is further connected to a coupler 105 and to a coupler 106, thereby conveying the input signal 101.

The coupler 105 conveys the incoming light via a phase adjustment 110 and a phase modulator 111 to a coupler 107 and also directly via a phase modulator 112 to said coupler 107.

Accordingly, the coupler 106 conveys the incoming light via a phase adjustment 113 and a phase modulator 114 to a coupler 108 and also directly via a phase modulator 115 to said coupler 108.

The output of the coupler 107 is fed via a terminal 119 to a monitor diode 117 and via a phase adjustment 116 to a coupler 109. The output of the coupler 108 is fed via a terminal 120 to a monitor diode 118 and to the coupler 109.

The coupler 109 provides two output signals 102 and 103. The modulator unit with its input and output ports 101, 102, 103, 119 and 120 is also depicted as a block 121, which will be used as such in the figures below.

The output signal 103 contains the same modulated data as does the output signal 102, but on the opposite spectral side of the carrier signal 101.

The modulator 121 is driven at a frequency ω, e.g., 5 GHz. The light of the output signal 102 is offset by +5 GHz and the light of the output signal 103 is offset by -5 GHZ from the carrier frequency.

As the driving signals are single frequencies, both the driving circuit and the electrode structure can be tailored to the respective frequency (e.g., by using resonant circuits), thus easing the requirements for the electronics.

The modulator 121 can be adjusted such that the carrier is in principle completely eliminated. In practice, without additional measures, the degree of carrier elimination is limited by the symmetry of the interferometer arms visible in a finite extinction ratio if the modulator is used as an amplitude modulator. A counter measurement against poor carrier suppression caused by poor symmetry of the modulator can be a slight misadjustment of the phase bias in the modulator arm with better extinction ratio.

The carrier is directed to the outputs which contain the monitor diodes 117, 118, which can be used for adequate adjustment of the bias phases. The carrier can, in some cases, also be used for further processing purposes.

To avoid strong distortions by harmonics, the best compromise between SSB generation efficiency and low harmonics seems to be a modulation depth of about 90° to 110° resulting in an efficiency of about 30%.

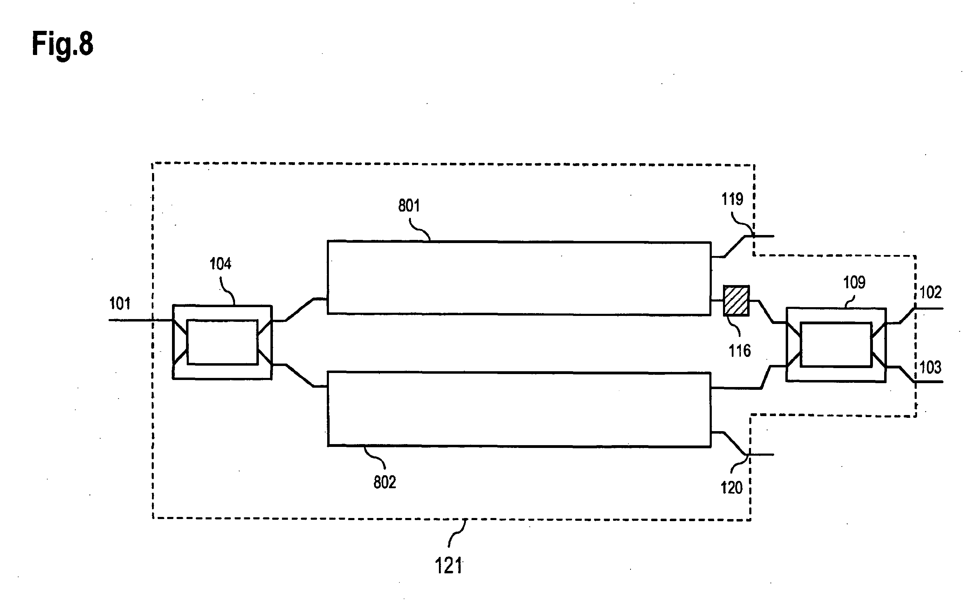

**Fig.8** shows a more generalized structure as Fig.1. Instead of the MZM mentioned, different modulator schemes may apply as indicated by blocks 801 and 802.

A first branch 801 provides an amplitude modulation with a first signal, said first signal being substantially sinusoidal. In addition, the first branch provides a phase shift, i.e., a 180-degree phase shift at the zero-crossing of the optical signal. A second branch 802 provides an amplitude modulation with a second signal, wherein the second signal is substantially 90 degree phase shifted compared to the first signal. For example, the first signal may be a sinus with a predefined frequency and the second signal may be a cosine with the same frequency. Due to the phase adjustment 116, the signals that are fed to the coupler 109 have an optical phase difference of (substantially) 90 degrees.

It is noted that hereinafter the modulator 121 may realized as shown and explained in Fig.1 or Fig.8.

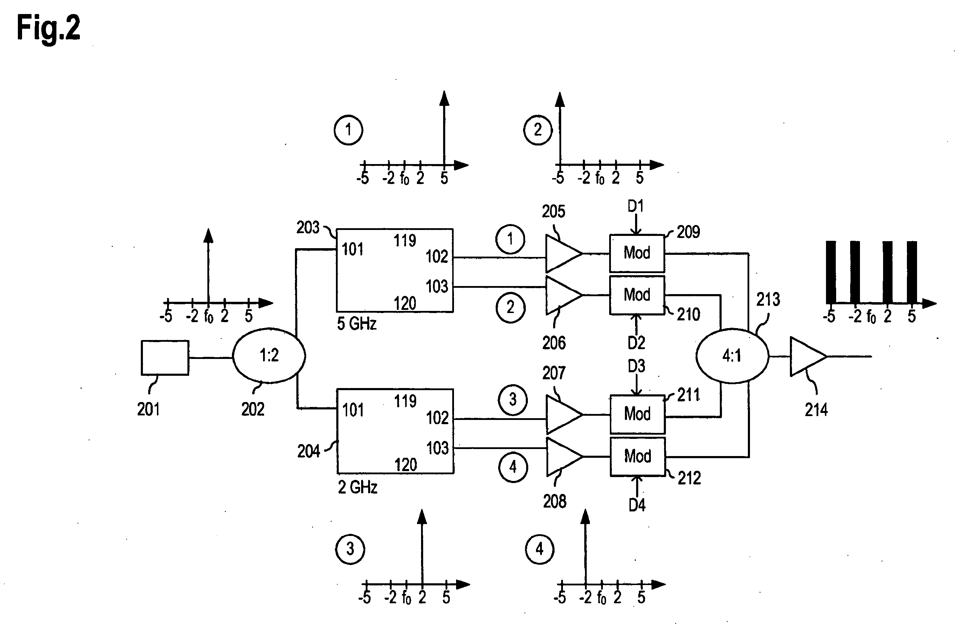

**Fig.2** shows a schematic block diagram comprising an exemplary optical multi-channel generator.

A single mode laser 201 feeds an optical signal via a splitter 202 to a modulator 203 and to a modulator 204. Each of the modulators 203 and 204 corresponds to the modulator 121 as shown in Fig.1. The modulator 203 operates at a frequency of 5 GHz and the modulator 204 operates at a frequency of 2 GHz.

The output signal of the modulator 203 provides a frequency with an offset of 5 GHz, which is fed via an optical amplifier 205 to a modulator 209 where it is modulated with a data signal D1. The output of the modulator 209 is conveyed to a combiner 213. Accordingly, another output signal of the modulator 203 provides a frequency with an offset of -5 GHz, which is fed via an optical amplifier 206 to a modulator 210 where it is modulated with a data signal D2. The output of the modulator 210 is conveyed to the combiner 213.

Also the output signal of the modulator 204 provides a frequency with an offset of 2 GHz, which is fed via an optical amplifier 207 to a modulator 211 where it is modulated with a data signal D3. The output of the modulator 211 is conveyed to the combiner 213. Accordingly, another output signal of the modulator 203 provides a frequency with an offset of -2 GHz, which is fed via an optical amplifier 208 to a modulator 212 where it is modulated with a data signal D4. The output of the modulator 212 is conveyed to the combiner 213.

The output of the combiner 213 is fed to an optical amplifier 214.

Hence, the modulator 203 generates two wavelengths with an offset of 5 GHz and -5 GHz from the carrier, i.e. the frequency of the single mode laser 201. The modulator 204 generates two wavelengths with an offset of 2 GHz and -2 GHz from the carrier. Each of the four outputs from the modulators 203 and 204 is then individually modulated with a data signal D1 to D4 at the data baseband and the four modulated signals are combined for transmission purposes.

The optical amplifiers 205 to 208 and 214 can be included in the structure; their dimensioning may in particular depend on the optical power budget.

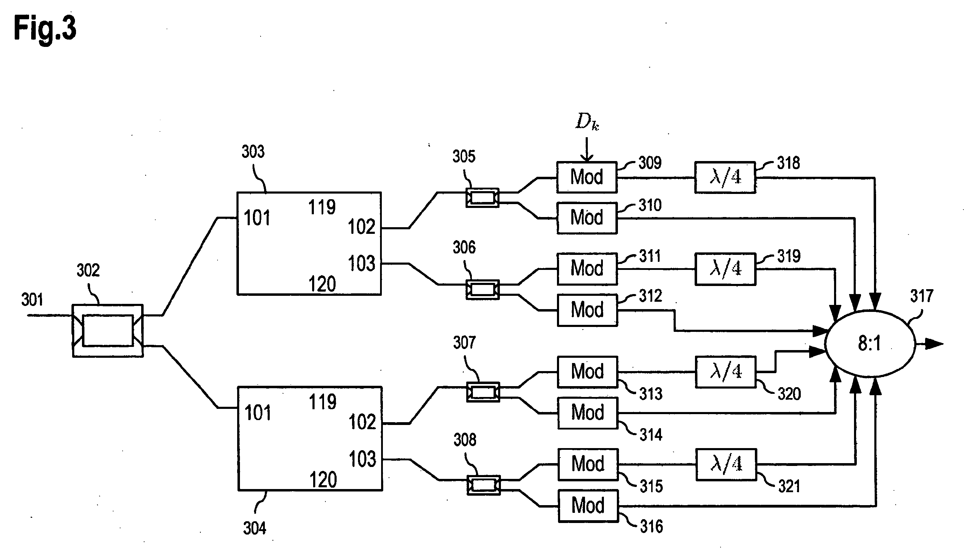

**Fig.3** shows a schematic diagram, wherein the structure of Fig.2 is extended to provide polarization multiplex (PolMux).

An optical signal 301 is fed to a splitter 302 and further to a modulator 303 and to a modulator 304. Each of the modulators 303 and 304 corresponds to the modulator 121 as shown in Fig.1.

The output signals of the modulator 303 are fed via splitters 305, 306 to modulators 309 to 312 where they are is modulated with data signals Dₖ (k=1...4). Each output of the modulators 309, 311 is conveyed via a λ/4 polarization converter 318, 319 to a combiner 317 and each output of the modulators 310, 312 is directly conveyed to the combiner 317.

Accordingly, output signals of the modulator 304 are fed via splitters 307, 308 to modulators 313 to 316 where they are is modulated with data signals Dₖ (k=5...8). Each output of the modulators 313, 315 is conveyed via a λ/4 polarization converter 320, 321 to the combiner 317 and each output of the modulators 314, 316 is directly conveyed to the combiner 317.

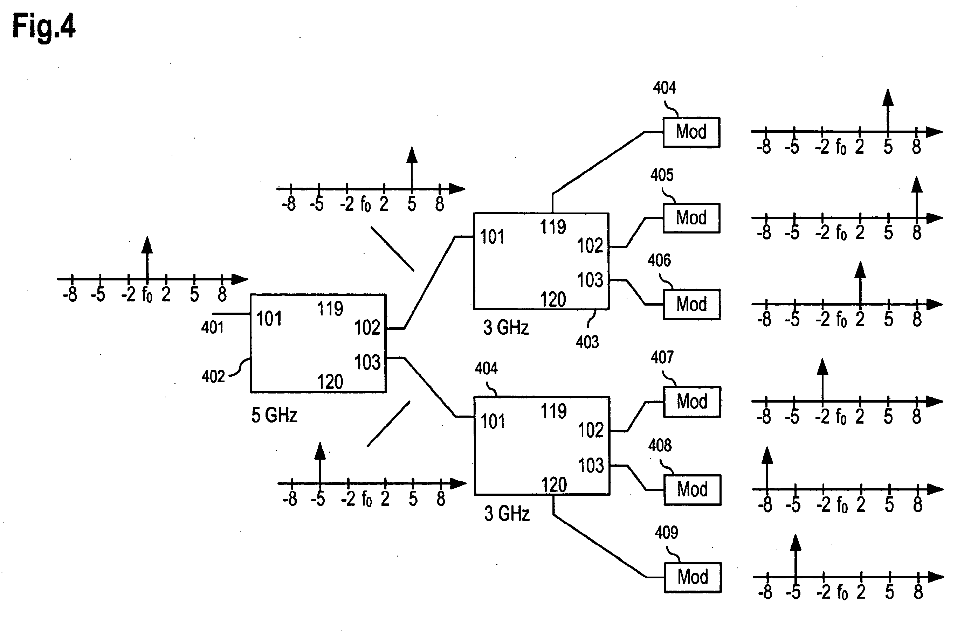

**Fig.4** shows an alternative block structure of an optical multi-channel generator providing six carriers.

An optical signal 401 is fed to a modulator 402 and further to a modulator 403 and to a modulator 404. Each of the modulators 402 to 404 corresponds to the modulator 121 as shown in Fig.1. The modulator 402 operates at a frequency of 5 GHz and the modulators 403, 404 each operates at a frequency of 3 GHz.

The output of the modulators 403 and 404 provides the carrier frequencies as shown on the right hand side, i.e. amounting to 5 GHz, 8 GHz, 2 GHz, -2 GHz, -8 GHz and -5 GHz relative to the frequency f₀ of the carrier frequency provided by the optical signal 401.

Each output signal of the modulators 403 and 404 is modulated with data signals (not shown in Fig.4) via modulators 404 to 409.

Both the parallel and the cascaded solution can be combined for a higher number of carrier frequencies to be provided. Also polarization multiplex could be combined if required.

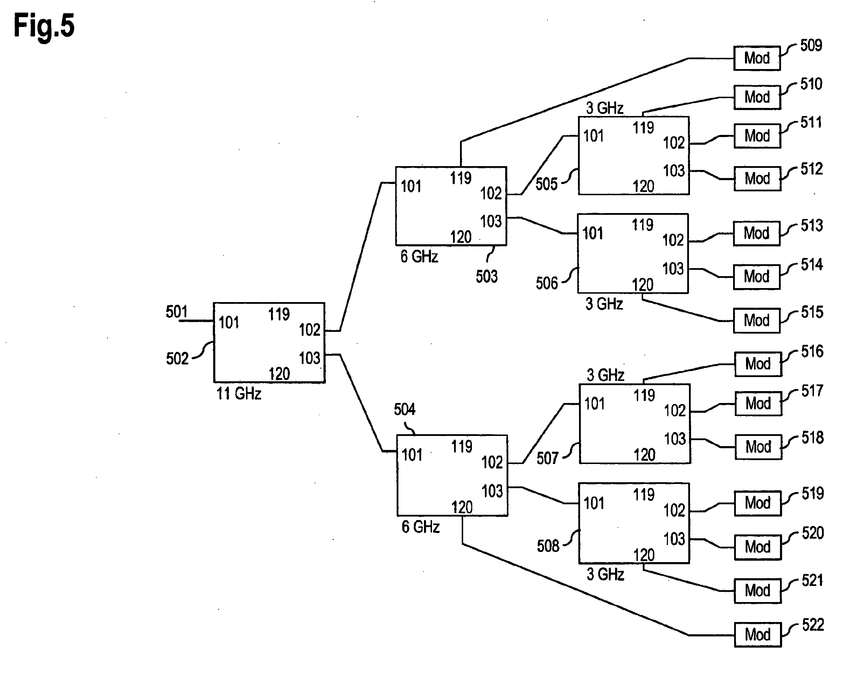

**Fig.5** shows another schematic block structure of an optical multi-channel generator providing 14 carriers.

An optical signal 501 is fed to a modulator 502, next to a modulator 503 and to a modulator 504 and further to modulators 505 to 508. Each of the modulators 502 to 508 corresponds to the modulator 121 as shown in Fig.1. The modulator 502 operates at a frequency of 11 GHz, the modulators 503, 504 each operates at a frequency of 6 GHz and the modulators 505 to 508 each operates at a frequency of 3 GHz.

The output of the modulators provides carrier frequencies amounting to 11 GHz, 17 GHz, 20 GHz, 14 GHz, 8 GHz, 2 GHz, 5 GHz and -11 GHz, -17 GHz, -20 GHz, -14 GHz, -8 GHz, -2 GHz, -5 GHz relative to the frequency f₀ of the carrier frequency provided by the optical signal 501.

The output signals of the modulators are modulated with data signals (not shown in Fig.5) via modulators 509 to 522.

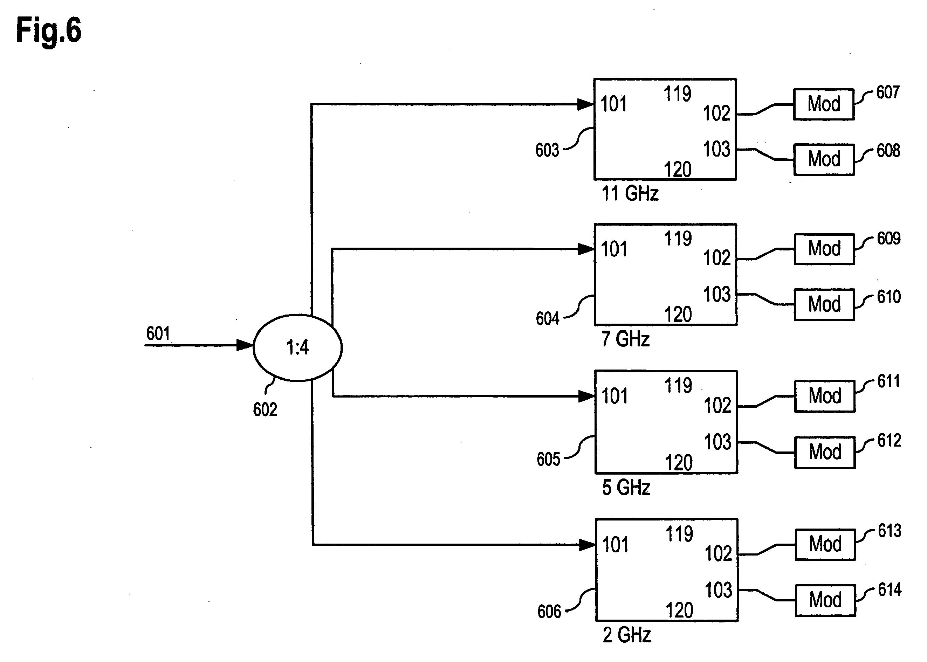

**Fig.6** shows a further schematic block structure of an optical multi-channel generator with a parallel structure providing 8 carriers.

An optical signal 601 is fed to a 1:4 splitter 602 and further to a modulator 603 with an operating frequency of 11 GHz, to a modulator 604 with an operating frequency of 7 GHz, to a modulator 605 with an operating frequency of 5 GHz and to a modulator 606 with an operating frequency of 2 GHz. Each of the modulators 603 to 606 corresponds to the modulator 121 as shown in Fig.1.

The output signals of the modulators 603 to 606 are modulated with data signals (not shown in Fig.6) via modulators 607 to 614.

It is noted that the combining of the data signal-modulated wavelengths is not shown in Fig.4 to Fig.6 for legibility reasons. However, as a final stage (according to the Fig.2 and Fig.3), a combiner can be provided that conveys all wavelengths onto a single fiber.

It is further noted that as an option, optical amplifiers may be supplied for power regeneration purposes. Such optical amplifiers may be provides as SOAs (semiconductor optical amplifiers) allowing integration of all the structures in InP.

It is also an option that the modulation signal which is modulated onto the generated wavelengths comprises several n sub-carriers itself, thus multiplying the number of wavelengths generated by the whole transmitter by n.

This can be achieved using the MZM (or a Michelson interferometer based, in general a two-way interferometer based IQ modulator) by applying electrical signals Dₖ as depicted in Fig.2 or in Fig.3 with two ore more signals in a baseband and additional electrical carriers. Preferably, a total phase modulation index may not exceed a value leading to a high harmonic generation, in case of a simple design without electronic pre-distortion the total modulation index may be below 110°.

A numeric example for generating eight wavelengths with frequency offsets compared to a carrier laser source according to Fig.2 is as follows: Driving the modulator 203 with a frequency amounting to 0,5 GHz and the modulator 204 with a frequency amounting to 6,5 GHz delivers frequency offsets of ± 0,5 GHz and ± 6,5 GHz at the outputs of the modulators 203, 204. Using carriers at the data modulation portion amounting to 1,5 GHz and 4,5 GHz an output of optical carriers may amount to ± 2 GHz, ± 5 GHz, ± 8 GHz and ± 11 GHz.

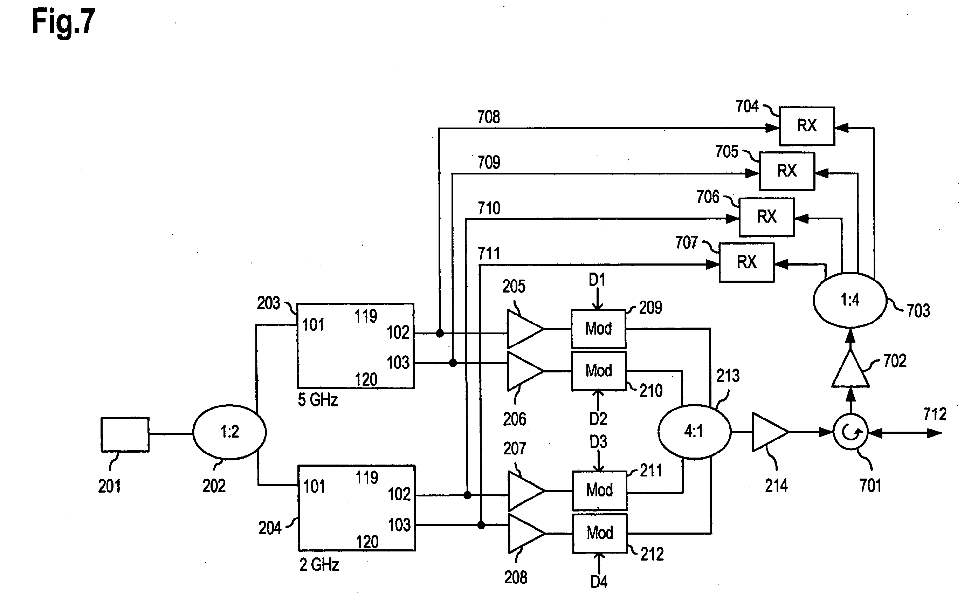

**Fig.7** shows a schematic diagram comprising a four channel transceiver to be used in an OLT. The transceiver comprises the optical multi-channel generator as shown in Fig.2.

In addition to Fig.2, the output of the optical amplifier is fed to a circulator 701, which is also connected to a fiber 712. Further, the circulator 702 is connected via an optical amplifier 702 to a 1:4 splitter 703 conveying incoming signals towards receivers 704 to 707.

Each of the receivers 704 to 707 receives an optical local oscillator signal 708 to 711, which is supplied by the optical multi-channel generator. Hence, the optical multi-channel generator is used for modulating the outgoing data signals D1 to D4 and for demodulating incoming signals conveyed to the receivers 704 to 707.

This approach also reduces electrical requirements at the coherent receiver by using a multi-wavelength optical local oscillator with multiple optical outputs each carrying one wavelength. A single local oscillator wavelength 704 to 707 is used for selection and demodulation of one optical channel or a subset of optical channels.

### Further Advantages:

The solution provided could be applied to, e.g., 100 G systems. The combination of four wavelengths, polarization multiplex and DQPSK results in 4 x 2 x 6,25 Gsymbols/s which corresponds to 100 Gb/s. In this arrangement the data processing speed, respectively the bandwidth of electrical circuitry, analog-to-digital converters and digital-to analog-converters may cope with a processing speed of 6,25 Gb/s, which is a significant reduction for a 100 G solution.

Hence, the solution requires less bandwidth for electrical circuitry, in particular with regard to analog-to-digital converters and digital-to-analog converters in case of digital processing.

The concept suggested is highly scalable to flexibly provide an appropriate number of wavelengths.

The costs of the overall system could be reduced by optimizing the number of optical components required (i.e. the chip-size) in view of electrical bandwidth requirements.

### List of Abbreviations:

- DQPSK: Differential QPSK
- HF: High Frequency
- MZM: Mach-Zehnder Modulator
- NGOA: Next Generation Optical Access
- OLT: Optical Line Terminal
- PolMux: Polarization Multiplex
- PSK: Phase Shift Keying
- QPSK: Quadrature PSK
- SSB: Single Sideband
- SSBM: SSB Modulator
- ONU: Optical Network Unit
- PON: Passive Optical Network
- FTTH: Fiber-to-the-Home
- FTTB: Fiber-to-the-Business
- FTTC: Fiber-to-the-Curb
- WDM: Wavelength Division Multiplexing
- UDWDM: Ultra Dense WDM

## Claims

1. An optical modulator (121)
- comprising a first branch and a second branch, both being connected via a coupler (104) to an input signal (101);
- wherein the first branch comprises a first amplitude modulator and a phase shifter (116), the first amplitude modulator comprising a coupler (105), a phase adjustment (110) connected to a first phase modulator (111) in a first arm of the amplitude modulator and a second phase modulator (112) in a second arm and a combiner (107) which combines the first and second arm, wherein the first amplitude modulator is operable by a first signal that is substantially sinusoidal;
- wherein the second branch comprises a second amplitude modulator (106, 113, 114, 108) that is operable by a second signal that is substantially 90 degree phase shifted to the first signal;
- comprising a combining unit (109) with two inputs and two outputs (102, 103) that combines the optical fields of the first branch and the second branch; **characterized in that**
- the first and the second output signals (102, 103) have a positive respectively negative frequency offset to the input signal (101), both offsets having the same absolute value and the input signal (101) is substantially completely eliminated from the first and second output signals (102, 103)

2. The optical modulator according to claim 1, wherein the optical modulator (121) comprises in its branches two-beam interferometers.

3. The optical modulator according to any of the preceding claims, wherein a phase of the first branch or a phase of the second branch is adjusted to at least partially compensate a deficient suppression of the frequency of the light source.

4. The optical modulator according to any of the preceding claims, wherein each output signal (102, 103) of the optical modulator (203, 204) is modulated with an electrical data signal (D1, D2, D3, D4) into an optical output signal that is combined and conveyed via an optical fiber.

5. The optical modulator according to any of the preceding claims, wherein each output signal (102, 103) of the optical modulator (303) is duplicated via a splitter (305, 306) and fed into a modulator (309, 310, 311, 312) and one of each split signals further to a polarization converter (318, 319) and the polarized output signal is combined and conveyed via an optical fiber.

6. The optical modulator according to any of the preceding claims, wherein the optical modulator supplies local oscillator signals in an optical component, in particular in an optical line terminal.

7. The optical modulator according claim 6, wherein each output of the optical modulator is connected to a receiver of the optical component.

8. A combined optical modulator comprising several optical modulators according to one of the claims 1 to7, wherein the several optical modulators are fed via a common light source.

9. A combined optical modulator comprising several optical modulators according to any of claims 1 to 7, wherein a first output of a first optical modulator is connected to an input of a second optical modulator and a second output of the first optical modulator is connected to an input of a third optical modulator.

10. A combined optical modulator comprising at least one combined optical modulator according to claim 8 and at least one combined optical modulator according to claim 9.

11. A communication system comprising at least one optical modulator according to any of claims 1 to 7 or at least one combined optical modulator according to any of claims 8 to 10.

12. A method for providing two optical carrier signals (102, 103) based on an input signal (101),
- wherein the input signal (101) is fed by a splitter (104) to a first branch and to a second branch;
- wherein the input signal is amplitude modulated and phase shifted by the first branch, wherein the input signal is amplitude modulated by a first signal that is substantially sinusoidal;
- wherein the input signal is amplitude modulated by a second signal in the second branch, wherein the second signal is substantially 90 degree phase shifted to the first signal;
- wherein the optical fields of the first branch and the second branch are combined by a combining unit (109), which supplies two outputs (102, 103); **characterized in that**
- each output (102, 103) provides an optical carrier having a positive respectively negative frequency offset to the input signal (101), both offsets having the same absolute value and
- wherein the input signal (101) is substantially completely eliminated from the first and second output signal (102, 103).

13. The method according to claim 12, wherein each output of the optical modulator is modulated with an electrical signal and in particular such modulated signal is fed via a combiner onto an optical fiber.

## Patentansprüche

1. Optischer Modulator (121),
- der einen ersten Zweig und einen zweiten Zweig umfasst, die beide über einen Koppler (104) mit einem Eingangssignal (101) verbunden sind;
- wobei der erste Zweig einen ersten Amplitudenmodulator und einen Phasenregler (116) umfasst, wobei der erste Amplitudenmodulator einen Koppler (105), einen Phaseneinsteller (110), der mit einem ersten Phasenmodulator (111) in einem ersten Arm des Amplitudenmodulators verbunden ist, einen zweiten Amplitudenmodulator (112) in einem zweiten Arm und einen Kombinierer (107) umfasst, der den ersten Arm und den zweiten Arm kombiniert, wobei der erste Amplitudenmodulator durch ein erstes Signal betrieben werden kann, das im Wesentlichen sinusförmig ist;
- wobei der zweite Zweig einen zweiten Amplitudenmodulator (106, 113, 114, 108) umfasst, der durch ein zweites Signal betrieben werden kann, das im Wesentlichen um 90 Grad gegenüber dem ersten Signal phasenverschoben ist.
- der eine Kombiniereinheit (109) mit zwei Eingängen und zwei Ausgängen (102, 103) umfasst, die die optischen Felder des ersten Zweigs und des zweiten Zweigs kombiniert; **dadurch gekennzeichnet, dass**
- das erste und das zweite Ausgangssignal (102, 103) eine positive bzw. negative Frequenzverschiebung gegenüber dem Eingangssignal (101) haben, wobei beide Verschiebungen den gleichen Betrag haben und das Eingangssignal (101) im Wesentlichen vollständig von dem ersten und dem zweiten Ausgangssignal (102, 103) entfernt wird.

2. Optischer Modulator nach Anspruch 1, wobei der optische Modulator (121) in seinen Zweigen ein Zweistrahlinterferometer umfasst.

3. Optischer Modulator nach einem der vorangegangenen Ansprüche, wobei eine Phase des ersten Zweiges oder eine Phase des zweiten Zweiges so eingestellt wird, dass sie zumindest teilweise eine unzureichende Unterdrückung der Frequenz der Lichtquelle kompensiert.

4. Optischer Modulator nach einem der vorangegangenen Ansprüche, wobei jedes Ausgangssignal (102, 103) des optischen Modulators (203, 204) mit einem elektrischen Datensignal (D1, D2, D3, D4) in ein optisches Ausgangssignal moduliert wird, das kombiniert und über eine optische Faser übertragen wird.

5. Optischer Modulator nach einem der vorangegangenen Ansprüche, wobei jedes Ausgangssignal (102, 103) des optischen Modulators (303) über einen Splitter (305, 306) verdoppelt wird und in einen Modulator (309, 310, 311, 312) gespeist wird und ein jedes der aufgespaltenen Signale weiter in einen Polarisationswandler (318, 319) gespeist wird und das polarisierte Ausgangssignal kombiniert wird und über eine optische Faser übertragen wird.

6. Optischer Modulator nach einem der vorangegangenen Ansprüche, wobei der optische Modulator Lokaloszillatorsignal in einer optischen Komponente bereitstellt, insbesondere in einem Optical Line Terminal.

7. Optischer Modulator nach Anspruch 6, wobei jeder Ausgang des optischen Modulators mit einem Empfänger der optischen Komponente verbunden ist.

8. Kombinierter optischer Modulator, der mehrere optische Modulatoren gemäß einem der Ansprüche 1 bis 7 umfasst, wobei die mehreren optischen Modulatoren über eine gemeinsame Lichtquelle gespeist werden.

9. Kombinierter optischer Modulator, der mehrere optische Modulatoren gemäß einem der Ansprüche 1 bis 7 umfasst, wobei ein erster Ausgang eines ersten optischen Modulators mit einem Eingang eines zweiten optischen Modulators verbunden ist und ein zweiter Ausgang des ersten optischen Modulators mit einem Eingang eines dritten optischen Modulators verbunden ist.

10. Kombinierter optischer Modulator, der mindestens einen kombinierten optischen Modulator nach Anspruch 8 und mindestens einen kombinierten optischen Modulator nach Anspruch 9 umfasst.

11. Kommunikationssystem, das mindestens einen optischen Modulator nach einem der Ansprüche 1 bis 7 und mindestens einen kombinierten optischen Modulator nach einem der Ansprüche 8 bis 10 umfasst.

12. Verfahren zum Bereitstellen zweier optischer Trägersignale (102, 103), gestützt auf ein Eingangssignal (101),
- wobei das Eingangssignal (101) durch einen Splitter (104) in einem ersten Zweig und einen zweiten Zweig eingespeist wird;
- wobei das Eingangssignal durch den ersten Zweig amplitudenmoduliert und phasenverschoben wird, wobei das Eingangssignal durch ein erstes Signal amplitudenmoduliert wird, das im Wesentlichen sinusförmig ist;
- wobei das Eingangssignal durch ein zweites Signal in dem zweiten Zweig amplitudenmoduliert wird, wobei das zweite Signal im Wesentlichen um 90 Grad phasenverschoben gegenüber dem ersten Signal ist;
- wobei die optischen Felder des ersten Zweigs und des zweiten Zweigs durch eine Kombiniereinheit (109) kombiniert werden, die zwei Ausgänge (102, 103) bereitstellt; **dadurch gekennzeichnet, dass**
- jeder Ausgang (102, 103) einen optischen Träger bereitstellt, der eine positive bzw. negative Frequenzverschiebung gegenüber dem Eingangssignal (101) aufweist, wobei beide Verschiebungen den gleichen Betrag haben; und
- wobei das Eingangssignal (101) im Wesentlichen vollständig von dem ersten und dem zweiten Ausgangssignal (102, 103) entfernt wird.

13. Verfahren nach Anspruch 12, wobei jeder Ausgang des optischen Modulators mit einem elektrischen Signal moduliert wird und insbesondere ein solches moduliertes Signal über einen Kombinierer in eine optische Faser gespeist wird.

## Revendications

1. Modulateur optique (121)
comprenant une première branche et une seconde branche, les deux étant connectées via un coupleur (104) à un signal d'entrée (101) ;
où la première branche comprend un premier modulateur d'amplitude et un déphaseur (116), le premier modulateur d'amplitude comprenant un coupleur (105), un réglage de phase (110) connecté à un premier modulateur de phase (111) dans un premier bras du modulateur d'amplitude et un second modulateur de phase (112) dans un second bras et un combineur (107) qui combine les premier et second bras, où le premier modulateur d'amplitude est utilisable par un premier signal qui est sensiblement sinusoïdal ;
où la seconde branche comprend un second modulateur d'amplitude (106, 113, 114, 108) qui est utilisable par un second signal qui est sensiblement déphasé de 90 degrés par rapport au premier signal ;
comprenant une unité de combinaison (109) avec deux entrées et deux sorties (102, 103) qui combine les champs optiques de la première branche et de la seconde branche ;
**caractérisé en ce que** :
les premier et second signaux de sortie (102, 103) ont un décalage de fréquence positif, respectivement négatif, par rapport au signal d'entrée (101), les deux décalages ayant la même valeur absolue et le signal d'entrée (101) est sensiblement complètement éliminé des premier et second signaux de sortie (102, 103).

2. Modulateur optique selon la revendication 1, dans lequel le modulateur optique (121) comprend dans ses branches des interféromètres à deux faisceaux.

3. Modulateur optique selon l'une quelconque des revendications précédentes, dans lequel une phase de la première branche ou une phase de la seconde branche est réglée pour, au moins en partie, compenser une suppression déficiente de la fréquence de la source de lumière.

4. Modulateur optique selon l'une quelconque des revendications précédentes, dans lequel chaque signal de sortie (102, 103) du modulateur optique (203, 204) est modulé avec un signal de données électrique (D1, D2, D3, D4) dans un signal de sortie optique qui est combiné et acheminé via une fibre optique.

5. Modulateur optique selon l'une quelconque des revendications précédentes, dans lequel chaque signal de sortie (102, 103) du modulateur optique (303) est dupliqué via un séparateur (305, 306) et transmis en entrée dans un modulateur (309, 310, 311, 312) et un de chacun des signaux séparés également transféré vers un convertisseur de polarisation (318, 319) et le signal de sortie polarisé est combiné et acheminé via une fibre optique.

6. Modulateur optique selon l'une quelconque des revendications précédentes, dans lequel le modulateur optique fournit des signaux d'oscillateurs locaux dans un composant optique, en particulier dans un terminal de ligne optique.

7. Modulateur optique selon la revendication 6, dans lequel chaque sortie du modulateur optique est connectée à un récepteur du composant optique.

8. Modulateur optique combiné comprenant plusieurs modulateurs optiques selon l'une des revendications 1 à 7, dans lequel la pluralité de modulateurs optiques sont alimentés via une source de lumière commune.

9. Modulateur optique combiné comprenant plusieurs modulateurs optiques selon l'une quelconque des revendications 1 à 7, dans lequel une première sortie d'un premier modulateur optique est connectée à une entrée d'un deuxième modulateur optique et une seconde sortie d'un premier modulateur optique est connectée à une entrée d'un troisième modulateur optique.

10. Modulateur optique combiné comprenant au moins un modulateur optique combiné selon la revendication 8 et au moins un modulateur optique combiné selon la revendication 9.

11. Système de communication comprenant au moins un modulateur optique selon l'une quelconque des revendications 1 à 7, ou au moins un modulateur optique combiné selon l'une quelconque des revendications 8 à 10.

12. Procédé pour délivrer deux signaux de porteuses optiques (102, 103) sur la base d'un signal d'entrée (101),
où le signal d'entrée (101) est transmis en entrée via un séparateur (104) à une première branche et à une seconde branche ;
où le signal d'entrée a une amplitude modulée et est déphasé par la première branche, où le signal d'entrée a une amplitude modulée par un premier signal qui est sensiblement sinusoïdal ;
où le signal d'entrée a une amplitude modulée par un second signal dans la seconde branche, où le second signal est sensiblement déphasé de 90 degrés par rapport au premier signal ;
où les champs optiques de la première branche et de la seconde branche sont combinés par une unité de combinaison (109), qui fournit deux sorties (102, 103) ;
**caractérisé en ce que** :
chaque sortie (102, 103) délivre un une porteuse optique ayant un décalage de fréquence positif, respectivement négatif, par rapport au signal d'entrée (101), les deux décalages ayant la même valeur absolue et,
où le signal d'entrée (101) est sensiblement complètement éliminé des premier et second signaux de sortie (102, 103).

13. Procédé selon la revendication 12, dans lequel chaque sortie du modulateur optique est modulée avec un signal électrique et en particulier un tel signal modulé est transmis en entrée, via un combineur, à une fibre optique.
